**Europäisches Patentamt**

**European Patent Office**

**Office européen des brevets**

(11) Veröffentlichungsnummer: **0 100 450**
A1

(12) **EUROPÄISCHE PATENTANMELDUNG**

(21) Anmeldenummer: **83106477.9**

(22) Anmeldetag: **02.07.83**

(51) Int. Cl.³: **B 60 K 31/00**

(30) Priorität: **30.07.82 DE 3228455**

(43) Veröffentlichungstag der Anmeldung:
**15.02.84 Patentblatt 84/7**

(84) Benannte Vertragsstaaten:
**DE FR GB SE**

(71) Anmelder: **ROBERT BOSCH GMBH**
**Postfach 50**
**D-7000 Stuttgart 1(DE)**

(72) Erfinder: **Leiber, Heinz**
**Theodor-Heuss-Strasse 34**
**D-7141 Oberriexingen(DE)**

(54) Geschwindigkeits-Steuereinrichtung für Fahrzeuge.

(57) Geschwindigkeits-Steuereinrichtung für Fahrzeuge mit Antrieb durch Brennkraftmaschinen und mit einer hydraulischen Verbindungsleitung zwischen einem ersten hydraulischen Stellzylinder (3), der vom Gaspedal (1) betätigbar ist und einem zweiten hydraulischen Stellzylinder (8), der mit der Drosselklappe (19), der Regelstange einer Einspritzpumpe bei Dieselmotoeren u. dgl. zur Einstellung des Betriebszustands der Brennkraftmaschine verbunden ist. In die hydraulische Verbindungsleitung ist ferner ein Mehrstellungsventil (14) geschaltet, welches von einer elektronischen Steuerschaltung (5) Steuerbefehle zugeführt erhält. Die elektronische Steuerschaltung (5) vergleicht ihr von Gebern zugeführte Eingangssignale (5a-d) und reagiert im Sinne eines übergeordneten Eingriffs auf weitere Subsysteme zur Motorregelung.

FIG. 1

EP 0 100 450 A1

0100450

R. 17955 He
1631/ot/mü
1. Juli 1982

— / —

ROBERT BOSCH GMBH, 7000 Stuttgart 1

## Geschwindigkeits-Steuereinrichtung für Fahrzeuge

### Stand der Technik

Die Erfindung geht aus von einer Geschwindigkeits-Steuereinrichtung nach der Gattung des Hauptanspruchs. Es ist bekannt, zur Geschwindigkeitssteuerung von Fahrzeugen, insbesondere solchen, die zum Antrieb mit Brennkraftmaschinen ausgerüstet sind, zwischen dem einer willkürlichen Beeinflussung durch den Fahrzeugführer unterworfenen ersten Stellglied, welches ein Gaspedal o. dgl. sein kann, und dem Element, welches die Brennkraftmaschine zu einer Änderung ihrer Drehzahl oder des von ihr abgegebenen Drehmoments veranlaßt, einen Leitungszug aus Schaltungselementen, Verstärkern, Vergleichern und Stellgliedern anzuordnen, der ein mechanisches Verbindungsgestänge ersetzt (DE-OS 27 01 567). Solche Schaltungssysteme, die auch als sogenanntes elektronisches Gaspedal oder in Form eines abkürzenden Fachworts als E-Gas bekannt sind, weisen einige Vorteile

/2

auf, die unter anderem darin bestehen, daß in die Motorsteuerung ergänzend Daten einbezogen werden können, die so ausgewertet werden, daß eindeutig vorliegende Fahrerwünsche in Arbeitspunkten des Motors mit minimalem Kraftstoffverbrauch ausgeführt werden. Ferner ist es möglich, die Übergänge zwischen
den drei Bereichen Beschleunigung, konstante Geschwindigkeit
und Verzögerung weich und gut einstellbar auszubilden. Neben
den Verbrauchsvorteilen eignet sich das elektronische Gaspedal
insbesondere auch für größere Fahrzeuge oder dort, wo eine umständliche Führung des mechanischen Verbindungsgestänges vom
Gaspedal beispielsweise bis zu einer Drosselklappe im Ansaugrohr der Brennkraftmaschine notwendig ist. Schließlich ist es
möglich, ergänzend noch Funktionen einer Antriebsschlupf- und
Fahrgeschwindigkeitsregelung einzubeziehen.

Als nachteilig könnte sich bei einer solchen elektronischen Gaspedalregelung allerdings der Umstand ergeben, daß im Fehlerfall, beispielsweise beim Ausfall der elektrischen Netzversorgung
oder sonstiger, an der Steuerung oder Regelung beteiligten Komponenten das Fahrzeug praktisch nicht mehr zu betreiben ist; ferner
muß mit einem relativ hohen Aufwand und kompliziertem Aufbau
der elektronischen Gaspedalsteuerung und Sicherheitsschaltung gerechnet werden.

Vorteile der Erfindung

Die erfindungsgemäße Geschwindigkeits-Steuereinrichtung mit
den kennzeichnenden Merkmalen des Hauptanspruchs hat demgegenüber den Vorteil einer überragenden Fehlersituation bei Auftreten sowohl von elektrischen Störungen als auch von Störungen in
der Druckmittelversorgung. Es kann ein einwandfreier Notbetrieb
aufrechterhalten werden, wobei sich gleichzeitig dann, wenn eine
Druckmittelversorgung vorhanden ist, ein leichter, einfacher und
kostengünstiger Aufbau ergibt. Unter Beibehaltung der für sich gesehen bekannten und weiter vorn schon angegebenen Vorteile des
elektronischen Gaspedals ermöglicht die Erfindung die gleichen
Motorsteuerungsfunktionen wie bei diesem, also sowohl Antriebs-
schlupf- als auch Fahrgeschwindigkeitsregelungen sowie Regelungen im Leerlauf- und Schubbetrieb der Brennkraftmaschine. In
vorteilhafter Weise ergibt sich ferner beispielsweise bei der
Funktion einer Antriebsschlupfregelung (ASR) eine Rückwirkung
auf das Gaspedal, was einer Warnung des Fahrzeugführers bei
Annäherung an den physikalischen Grenzbereich entspricht. In
diesem Fall läßt sich das Gaspedal nicht voll durchtreten. Bei
einsetzender ASR-Funktion wird die Betätigungscharakteristik
durch einen kleinen Kolbenspeicher bestimmt.

Die hydraulische Stellgliedbetätigung ermöglicht ferner eine Direktsteuerung etwa der Einspritzpumpen bei Dieselmotoren. Schließlich erfolgt auch bei voller Ausschöpfung der Leistungsfähigkeit
des Systems, also bei Ausnutzung der hydraulischen Verstärkung,
die durch die Verwendung eines elektrohydraulischen Stellgliedes
geboten wird, die Verstellung mit kleinen Zeitkonstanten.

Durch die in den Unteransprüchen aufgeführten Maßnahmen sind
vorteilhafte Weiterbildungen und Verbesserungen der im Haupt-

1631/ot/mü
1. Juli 1982                                   - 4 -

anspruch angegebenen Geschwindigkeits-Steuereinrichtung möglich. Besonders vorteilhaft ist die Ausbildung des elektrohydraulischen Stellglieds als 4/4-Wege-Magnetventil, wobei dessen jeweilige Stellung von einer übergeordneten elektrischen oder
elektronischen Steuerschaltung bestimmt wird. Durch die Kombination eines hydraulischen Stellgliedes, eines in dessen Zuleitung eingeschalteten elektrohydraulischen Magnetventils und einer
elektronischen Steuerschaltung ist es möglich, der Regelung eine
Vielzahl von weiteren Signalen aufzuschalten, die eine Berücksichtigung finden können und die neben der Einhaltung des Betriebs
in Arbeitspunkten mit minimalem Kraftstoffverbrauch auch Signale
der Antriebsschlupfregelung oder einer Fahrgeschwindigkeitsregelung umfassen.

Zeichnung

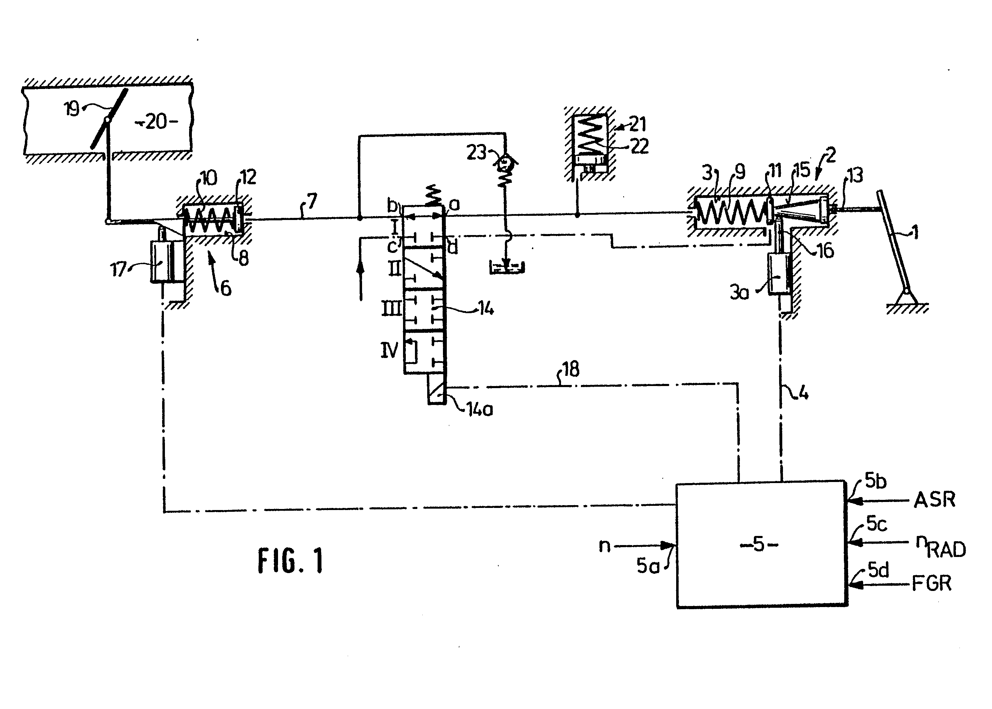

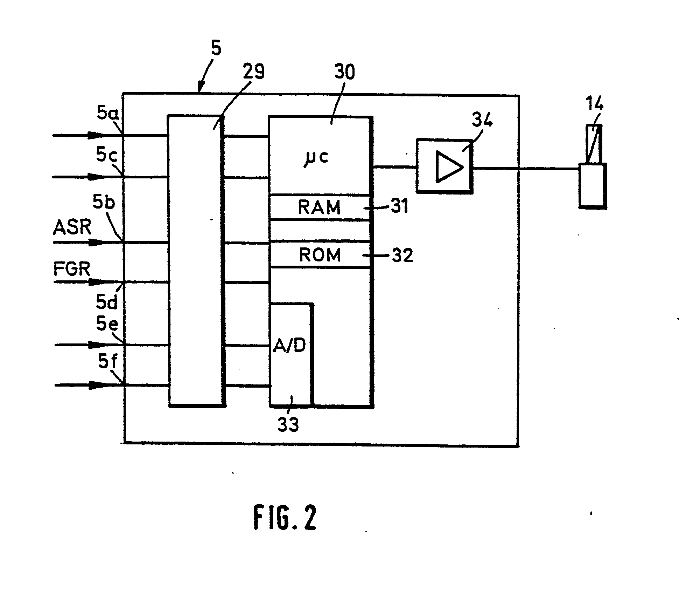

Ein Ausführungsbeispiel der Erfindung ist in der Zeichnung dargestellt und wird in der nachfolgenden Beschreibung näher erläutert. Die Fig. 1 zeigt den Einsatz eines erfindungsgemäßen,
besonders bevorzugten Ausführungsbeispiels einer hydraulischen
Geschwindigkeitsregelung in Anwendung auf eine Brennkraftmaschine mit Drosselklappensteuerung im Ansaugrohr und die
Fig. 2 zeigt ein Blockschaltbild einer elektronischen
Steuerschaltung.

Beschreibung der Ausführungsbeispiele

Der Grundgedanke vorliegender Erfindung besteht darin, für
die Motorsteuerung bei Fahrzeugen ein sogenanntes H-Gas-System

1631/ot/mü
1. Juli 1982                        - 5 -


einzusetzen, welches im einfachsten Fall die Anordnung einer
hydraulischen Verbindungsleitung zwischen einem ersten, willkürlich vom Fahrzeugführer betätigten Stellglied (Gaspedal) und
eines zweiten Stellglieds umfaßt, welches beim dargestellten Ausführungsbeispiel ein Drosselklappenstellglied ist; ferner die Anordnung eines elektrohydraulischen Stellglieds (Mehrstellungsventil) im
Verlauf der Hydraulikleitung.

In der Zeichnung ist ein Gas- oder Fahrpedal, welches vom
Fahrzeugführer in seiner Position willkürlich veränderbar ist,
mit 1 bezeichnet; das Gaspedal wirkt auf ein erstes Stellglied 2,
bestehend aus einem hydraulischen Zylinder 3 und einem zugeordneten Geber 3a. Der Geber 3a ist so ausgebildet, daß er den
Verstellweg des hydraulischen Stellzylinders 3 erfaßt und an
seinem Ausgang in ein vorzugsweise elektrisches Signal umwandelt und über eine elektrische Verbindungsleitung 4 einer elektronischen Steuerschaltung 5 zuführt. Es wird darauf hingewiesen,
daß in der Zeichnung elektrische Verbindungsleitungen strichpunktiert, hydraulische Verbindungsleitungen gestrichelt oder
durchgezogen dargestellt sind. So ist die Verbindungsleitung
zwischen dem ersten Stellglied 2 und einem zweiten Stellglied 6
als hydraulische Leitung 7 ausgebildet. Jeder hydraulische Stellzylinder 3 bzw. 8 des ersten und zweiten Stellgliedes 2, 6 umfaßt,
zur Verdeutlichung seiner Wirkungsweise -im praktischen Ausführungsbeispiel kann dieser unterschiedlich realisiert sein -
eine Vorspannungsfeder 9 bzw. 10 und einen Kolben 11 bzw. 12.
Auf den Kolben 11 des ersten Stellgliedes 2 wirkt mechanisch die
insgesamt mit 13 bezeichnete Verbindung zum Gaspedal 1, wo-

1631/ot/mü
1. Juli 1982                    - 6 -


durch sich eine Verschiebung des Kolbens 11 und ein entsprechender Druckmittelfluß in der hydraulischen Leitung 7 zum
hydraulischen Zylinder 8 des zweiten Stellgliedes ergibt, allerdings nur in der in der Zeichnung dargestellten Stellung des in
die hydraulische Leitung noch geschalteten elektrohydraulischen
Stellgliedes 14. Es sei an dieser Stelle darauf hingewiesen, daß
diese Schaltposition des elektrohydraulischen Stellgliedes dem
Sonderfall des Betriebs ohne hydraulische Verstärkung des
Systems entspricht bzw. dem Notbetrieb - hierauf wird weiter
unten noch eingegangen.

Über eine in der Zeichnung vereinfacht dargestellte mechanische
Übertragungseinrichtung, nämlich einer geeigneten Schrägfläche
15 im mechanischen Übertragungsgestänge 13 zwischen Gaspedal 1 und dem Kolben oder Schieber des hydraulischen Stellzylinders 3 läßt sich vom Geber 3a über ein Tastglied 16, welches
demnach nockenartig an der Schrägfläche 15 läuft, die jeweilige
Gaspedalstellung als mechanische Wegverschiebung
erfassen. Die Ausbildung des Gebers 3a kann grundsätzlich beliebig sein und jede beliebige Form eines Weg/Spannung- bzw.
Weg/Frequenz-Wandlers umfassen. Demnach gelangt vom Ausgang des Gebers 3a am ersten Stellglied 2 ein elektrisches Sollwertsignal der Fahrpedalstellung auf die elektrische oder elektronische Steuer- oder Logikschaltung und in entsprechender
Weise gelangt vom Ausgang eines weiteren, dem zweiten Stellglied 6 zugeordneten Gebers 17 ein dem Istwert hier der Drosselklappenposition entsprechendes elektrisches Signal zur elektro-

/7

1631/ot/mü
1. Juli 1982                                    - 7 -

nischen Steuerschaltung. Es versteht sich, daß die Art der
Erfassung der Verschiebebewegungen der Kolben der Stellzylinder grundsätzlich beliebig ist; so können auch Potentiometer vorgesehen sein, die als Geber zur Erzeugung der elektrischen Soll-
und Istwertsignale eingesetzt sind.

Das zwischen den beiden hydraulischen Stellzylindern angeordnete
elektrohydraulische Stellglied ist bevorzugt ein 4/4-Wege-Magnetventil, wobei die von diesem Magnetventil jeweils entsprechend der
Zuführung des elektrischen Stellsignals einzunehmenden Positionen
mit I bis IV gekennzeichnet sind. Der Anschluß a des Magnetventils
ist mit dem Druckausgang des hydraulischen Stellzylinders 3 des
ersten Stellgliedes 2 verbunden; der Anschluß b mit dem die Drosselklappenstellung bestimmenden Stellzylinder 8; der Anschluß c
dient der Druckmittelversorgung von einer in der Zeichnung
nicht dargestellten gesonderten Druckmittelquelle, für die vorzugsweise auch die Druckversorgung von sonstigen vorhandenen
Basissystemen, beispielsweise Servolenkung, Getriebe, Antiblockiersysteme (ABS) verwendet werden kann, und der Anschluß d
dient dem Druckmittelablaß in den Rücklauf, der schematisch als
Druckmittelsumpf 18 dargestellt ist.

Die Ausbildung der elektronischen Steuerschaltung ist
in Fig. 2 gezeigt. Als Signale über den Betriebszustand
der Brennkraftmaschine wird der Steuerschaltung 5 an
ihrem Eingang 5a ein Drehzahlsignal n, und an ihren
weiteren Eingängen 5b, 5c und 5d zusätzliche Signale
für ergänzende Funktionen, nämlich ein Antriebsschlupfregelungssignal ASR, ein Drehzahlsignal bezüglich der
effektiven Radumdrehung $n_{Rad}$ und sogenannte FGR-Signale
zugeführt, die von einem Fahrgeschwindigkeitsregelschalter stammt. Schließlich wird noch die Fahrpedalstellung
5e (über die Leitung 4) und die Drosselklappenstellung
5f eingegeben. Das Stellglied 6 zur Drosselklappenverstellung - es versteht sich, daß hier auch jedes andere,
den jeweiligen Betriebszustand der Brennkraftmaschine
beeinflussende Element angesteuert und verstellt werden
kann - wird dann angesteuert, wenn sich Abweichungen

der Stellungszuordnung der Gebersignale ergeben oder ein übergeordneter Eingriff durch Subsysteme zur Motorregelung, wie
sie an der elektronischen Steuerschaltung 5 anliegen können,
erforderlich oder wünschenswert ist. Im einzelnen ergibt sich
dann folgende Funktion, wenn zunächst der Anwendungsfall zur
Ausnutzung der hydraulischen Verstärkung berücksichtigt wird.
Nach Betätigung des Geberzylinders 3 über das Gaspedal wird
gleichzeitig auch der zugeordnete Geber 3a aktiviert, dessen
Ausgangssignal dann mit dem Stellungsgeber 17 am hydraulischen
Stellzylinder 8 des zweiten Stellgliedes verglichen wird. Eine
positive Abweichung beider Signale führt zu einem Ausgangssignal
einer von der elektronischen Steuerschaltung 5 umfaßten (nicht dargestellt)
Komparatorschaltung und ergibt die Zuführung eines solchen
elektrischen Steuersignals zum Magnetteil 14a des Magnetventils 14 über die Ausgangsleitung 18, daß das Mehrstellungs-Magnetventil in seine Stellung IV umschaltet. Es kommt dann über
die in diesem Fall miteinander verbundenen Anschlüsse b und c

0109450

zu einer Druckeinspeisung am Stellzylinder 8 des Stellglieds 6
und einer entsprechenden Verstellung der Drosselklappe 19 im
Ansaugrohr 20. Diese Verstellung des Stellzylinders führt letztlich zur Regelabweichung Null, so daß das Mehrstellungsventil
unter der jetzt geänderten Ansteuerung vom Ausgang der elektronischen Steuerschaltung in die dritte Schaltstellung III umschaltet,
in welcher sämtliche Anschlüsse a, b, c und d untereinander gesperrt sind. Wird das Gaspedal zurückgenommen, dann ergibt
sich eine in diesem Fall als negativ bezeichnete Regelabweichung,
die dann dazu führt, daß unter der Ansteuerung der elektronischen
Steuerschaltung 5 das Mehrstellungsventil 14 in die zweite Schaltstellung II übergeht und Druckmittel aus dem Stellzylinder 8 in
den Rücklauf abläßt. Diese soeben erläuterte Hauptfunktion des
erfindungsgemäßen H-Gas-Systems erfährt eine Ausgestaltung
durch die Anordnung eines kleineren Kolbenspeichers 21 in der
Verbindungsleitung vom Stellzylinder 3 zum Anschluß a des
Mehrstellungs-Magnetventils 14. Der Kolbenspeicher 21, auf
dessen Aufbau nicht weiter eingegangen zu werden braucht, hat
die Aufgabe, bei Anwendung der hydraulischen Verstärkung die
Bewegung des Geberzylinders und damit eine beliebige Sollwert-
Vorgabe zu ermöglichen, wenn sich das Magnetventil 14 in einer
der Schaltstellungen II bis IV befindet, da in diesem Fall die Verbindung von der Geberseite zum Stellzylinder 8, wie die gezeichneten Stellungen II, III und IV des Ventils 14 zeigt, unterbrochen
ist. In vorteilhafter Ausgestaltung kann dabei die Feder 22 des
kleinen Kolbenspeichers progressiv ausgeführt sein.

Da die zur Betätigung der Drosselklappe 19 erforderliche Leistung
vergleichsweise gering ist, kann die Hydraulikleitung 7 vom
ersten Stellglied zum Stellzylinder 8 als Niederdruckleitung ausgebildet sein. Andererseits ist es wünschenswert und sinnvoll,
das erfindungsgemäße H-Gas-System sinnvollerweise mit einem
anderen Hydrauliksystem und dessen Druckversorgung zu koppeln,
schon um den Aufwand geringer zu halten. Da solche beim Betrieb von Kraftfahrzeugen noch vorhandene Hydrauliksysteme
aber in der Regel als Mittel- oder Hochdrucksysteme ausgebildet sind, wird die Niederdruckleitung über ein Rückschlagventil
23 abgesichert. Diese Absicherung dient dem Fehlerfall, in
welcher durch eine mögliche Fehlschaltung des Magnetventils 14
in der Hydraulikleitung 7 ein zu hohes Druckniveau entsteht.

Bei vorliegender Erfindung sind noch die folgenden vorteilhaften
Ausgestaltungen möglich. Befindet sich das System im Leerlaufbetrieb, dann erfolgt Druckmittelzufuhr durch Schalten des
Magnetventils 14 in die Position IV, wobei eine entsprechende
Leerlaufdrehzahlregelung möglich ist durch Zuführung und Auswertung der Motordrehzahl am Eingang 5a der elektronischen
Regelschaltung.

Ferner ist die elektronische Regelschaltung so ausgelegt, daß
der weiter vorn zur Erläuterung der Grundfunktion angegebene
Regelkreis unterbrochen wird, wenn die elektronische Regelschaltung 5 Signale einer Antriebsschlupfregelung oder Fahrgeschwindigkeitsregelung zugeführt erhält. Man erkennt, daß sich

/11

das erfindungsgemäße H-Gas-System insbesondere auch zur Fahrgeschwindigkeitsregelung in Kombination mit der Basisschaltung und in deren Erweiterung eignet, denn da dem Steuergerät eine Information über die Radgeschwindigkeit sowie die Schaltersignale des Fahrgeschwindigkeitsreglers (FGR) zugeführt werden, kann dieses problemlos das Mehrstellungs-Magnetventil 14 so ansteuern, daß eine gewünschte Fahrgeschwindigkeit durch die selbständige Drosselklappenverstellung eingehalten wird.

Im Falle der Aufschaltung der Antriebsschlupfregelung (ASR) bewirken deren Signale eine Rückstellung oder Zustellung der Drosselklappe oder auch der Regelstange einer Dieseleinspritzpumpe zur Reduzierung oder gegebenenfalls auch Erhöhung des Motordrehmoments. Die ASR-Signale werden dabei in einer speziellen, hier nicht dargestellten Schaltung aufbereitet, die für sich gesehen bekannt ist und die je nach Ausbildung, einen speziellen Regelalgorithmus enthalten kann, der im wesentlichen die Radgeschwindigkeitsinformation, die Drosselklappenstellung und die Motordrehzahl verarbeitet. Auch in diesem Fall eignet sich das H-Gas-System besonders vorteilhaft für die Antriebsschlupfregelung, da hierbei durch die jeweils selbständig gewählten Arbeitsstellungen des Mehrstellungsventils auch eine Rückwirkung auf das Gaspedal und daher eine entsprechende Warnfunktion für den Fahrzeugführer entsteht. Dies ist durchaus gewünscht, da sich ein Fahrzeug aufgrund der Funktion der Antriebsschlupfregelung hinsichtlich seiner Fahrstabilität insbesondere auch bei winterlichen Straßenverhältnissen bereits im

01 00450

physikalischen Grenzbereich befinden kann, ohne daß der Fahrer
dies bemerkt, da die Antriebsschlupfregelung eine Rückwirkung
durch durchdrehende Räder oder Gier- oder Schleuderbewegungen
des Wagens selbst gerade vermeiden soll. Der Fahrer spürt jedoch den Eingriff der Antriebsschlupfregelung durch ein hartes
oder härter werdendes Gaspedal, da in diesem Fall unter der übergreifenden Steuerung der auf die ASR-Signale mit Vorrang achtenden elektronischen Steuerschaltung das Magnetventil in einer der
Schaltstellungen II bis IV arbeitet und der Anschluß a gesperrt ist.

Schließlich läuft das Mehrstellungsventil 14 bei beliebigen Störungen und insofern auch bei Ausfall der elektronischen Ansteuerung, Kurzschluß im Bordnetz u. dgl. auf die in der Zeichnung
dargestellte Ausgangsposition I zurück und stellt in diesem Fall
dann eine durchgehende hydraulische Verbindung vom ersten
Stellglied zum an der Drosselklappe angreifenden Stellzylinder
her.

Neben der Anwendung des erfindungsgemäßen H-Gas-Systems
zur Motorsteuerung beispielsweise bei der Leerlaufdrehzahl-,
Kupplungs- und Fahrgeschwindigkeitsregelung eignet sich die
Erfindung noch in besonderer Weise zur Kraftstoffreduzierung
durch die jeweilige Arbeitspunktbestimmung mittels Kennfeldsteuerung des Motors.

1631/ot/mü
1. Juli 1982

ROBERT BOSCH GMBH, 7000 Stuttgart 1

Patentansprüche

1. Geschwindigkeits-Steuereinrichtung für Fahrzeuge, insbesondere mit Antrieb durch Brennkraftmaschine, mit einem vom Fahrzeugführer betätigbaren ersten Stellglied und einem zweiten Stellglied, welches an einem den Betriebszustand der Brennkraftmaschine beeinflussenden Element (Drosselklappe, Einspritzpumpe u. dgl.) angreift, dadurch gekennzeichnet, daß mindestens das zweite Stellglied (6) einen hydraulischen Stellzylinder (8) zur mechanischen Verstellung des den Betriebszustand bestimmenden Elements umfaßt und daß diesem Stellglied ein in mindestens zwei Stellungen verschiebbares, elektrohydraulisches Mehrstellungsventil oder eine Magnetventilkombination (14) vorgeschaltet ist.

2. Einrichtung nach Anspruch 1, dadurch gekennzeichnet, daß das erste Stellglied (2) einen als Weg-Spannungs-Wandler ausgebildeten Geberteil (3a) aufweist, dessen Ausgang mit einer elektrischen oder elektronischen Steuerschaltung (5)

/2

verbunden ist, der zur Vergleichsdurchführung ferner ein
Positionssignal (Istwertsignal) des zweiten Stellglieds (6) zugeführt ist und deren Ausgang mit dem Magnetteil (14a) des
Mehrstellungsventils (14) verbunden ist.

3. Einrichtung nach Anspruch 1, dadurch gekennzeichnet,
daß das erste Stellglied einen hydraulischen Stellzylinder (3)
aufweist, der über eine hydraulische Leitung (7) mit dem hydraulischen Stellzylinder (8) des zweiten Stellgliedes (6) unter
Zwischenschaltung des Mehrstellungsventils (14) verbunden ist.

4. Einrichtung nach Anspruch 1, dadurch gekennzeichnet, daß der Steuerschaltung (5) von Subsystemen
(Leerlaufdrehzahlregelung, Kupplungsregelung, Fahrgeschwindigkeitsregelung, Kennfeldsteuerung Motor zur Kraftstoffverbrauchsreduzierung, Antriebsschlupfregelung) zur Betriebszustandsregelung der Brennkraftmaschine Steuersignale (ASR;
FGR; $n_{Mot}$; $n_{Rad}$) zugeführt sind zur Bewirkung übergeordneter Eingriffe am Mehrstellungsventil (14).

5. Einrichtung nach Anspruch 1, dadurch gekennzeichnet, daß das Mehrstellungsventil ein 4/4-Wegeventil
ist mit einer ersten Stellung (Ruhestellung I), in welcher die
Anschlüsse der hydraulischen Stellzylinder (3, 8) des ersten
und zweiten Stellglieds (2, 6) durchverbunden sind, einer
zweiten Stellung (II), in welcher bei Sperrung der anderen
Anschlüsse die Verbindung zum hydraulischen Stellzylinder (8)

1631/ot/mü
1. Juli 1982

des zweiten Stellgliedes (6) in den Rücklauf geöffnet ist, einer dritten Stellung (III), in welcher sämtliche Anschlüsse gegeneinander abgesperrt sind und einer vierten Stellung (IV), in welcher der hydraulische Stellzylinder des zweiten Stellgliedes (6) mit einer Druckversorgung (Antiblockierschutz, Servolenkung, Getriebe) verbunden ist.

6. Einrichtung nach Anspruch 5, dadurch gekennzeichnet, daß bei Anschluß der Druckversorgung an ein vorhandenes Mittel- oder Hochdrucksystem des Kraftfahrzeugs die als Niederdruckleitung ausgebildete Verbindungsleitung (7) zwischen dem ersten und dem zweiten Stellglied durch ein Rückschlagventil (23) gesichert ist.

7. Einrichtung nach Anspruch 1, dadurch gekennzeichnet, daß in der Niederdruckleitung (7) zwischen dem Stellzylinder (3) des ersten Stellglieds (2) und dem Mehrstellungsventil (14) ein Kolbenspeicher (21) angeordnet ist.

8. Einrichtung nach Anspruch 1, gekennzeichnet durch die Kombination des Geberzylinders mit einem hydraulischen Bremskraftverstärker.

9. Einrichtung nach Anspruch 1, gekennzeichnet durch den Anschluß an der Druckversorgung eines hydraulischen Bremskraftverstärkers.

FIG. 1

FIG. 2

**Europäisches Patentamt**

# EUROPÄISCHER RECHERCHENBERICHT

| EINSCHLÄGIGE DOKUMENTE | | | EP 83106477.9 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl. ³)** |
| A | US - A - 3 238 806 (MULLANEY)<br><br>* Spalte 1, Zeile 57 - Spalte 2, Zeile 56 *<br><br>-- | 1,3 | B 60 K 31/00 |
| A | DE - A1 - 2 836 342 (DAIMLER-BENZ AG)<br><br>* Seite 9, 2. Absatz - Seite 10, 1. Absatz *<br><br>-- | 1 | |
| A | DE - B - 1 151 737 (DAIMLER-BENZ AKTIENGESELLSCHAFT)<br><br>* Spalte 1, Zeilen 1-9 *<br><br>-- | 1 | |
| D,A | DE - A1 - 2 701 567 (ROBERT BOSCH GMBH)<br><br>-- | | **RECHERCHIERTE SACHGEBIETE (Int. Cl. ³)** |
| A | US - A - 2 966 328 (BURNWORTH)<br><br>---- | | B 60 K |

Der vorliegende Recherchenbericht wurde für alle Patentansprüche erstellt.

| Recherchenort | Abschlußdatum der Recherche | Prüfer |
|---|---|---|
| WIEN | 28-10-1983 | DENK |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

‐‐‐‐‐‐‐‐‐‐‐‐‐‐‐‐‐‐‐‐‐‐

& : Mitglied der gleichen Patentfamilie, übereinstimmendes Dokument

EPA Form 1503. 03.82